# EUROPÄISCHE PATENTSCHRIFT

(11) **EP 2 748 346 B1**
(45) Veröffentlichungstag und Bekanntmachung des Hinweises auf die Patenterteilung: **26.08.2015**
(21) Anmeldenummer: 12766971.1
(22) Anmeldetag: 01.10.2012
(51) Int. Cl.: C22C 21/02, C22C 21/14, C22C 21/16, B22D 17/00, B22D 18/02, B22D 21/04, F16J 1/01, C22C 21/12, F02F 3/00, B22D 15/02

(54) **VERFAHREN ZUR HERSTELLUNG EINES MOTORBAUTEILS UND MOTORBAUTEIL**
METHOD FOR PRODUCING AN ENGINE COMPONENT, AND ENGINE COMPONENT
PROCÉDÉ DE PRODUCTION D'UN ÉLÉMENT DE MOTEUR ET ÉLÉMENT DE MOTEUR

(30) Priorität: 04.10.2011 DE 102011083968
(43) Veröffentlichungstag der Anmeldung: 02.07.2014
(73) Patentinhaber: Federal-Mogul Nürnberg GmbH, 90441 Nürnberg (DE)
(72) Erfinder: MORGENSTERN, Roman, 91560 Heilsbronn (DE); GÖKEN, Mathias, 91056 Möhrendorf (DE); HÖPPEL, Heinz Werner, 91058 Erlangen (DE); KORN, Matthias, 91052 Erlangen (DE); BECK, Tilmann, 52428 Jülich (DE); HUMBERTJEAN, Alexander, 52064 Aachen (DE); KNOBLOCH, Holger, 73547 Lorch (DE)
(74) Vertreter: Hoffmann Eitle
(86) Internationale Anmeldenummer: PCT/EP2012/069336
(87) Internationale Veröffentlichungsnummer: WO 2013/050322

(56) Entgegenhaltungen:
- WO-A1-00/71767
- WO-A1-00/71772
- WO-A2-2006/056686
- DE-C1- 10 110 769
- FR-A1- 2 859 484
- GB-A- 361 248
- JP-A- 2004 256 873
- US-A- 5 253 625
- US-A1- 2003 192 627

## Beschreibung

### TECHNISCHES GEBIET

Die vorliegende Erfindung betrifft ein Verfahren zur Herstellung eines Motorbauteils, insbesondere eines Kolbens für einen Verbrennungsmotor, bei dem eine Aluminiumlegierung im Druckgussverfahren abgegossen wird, ein Motorbauteil, das zumindest teilweise aus einer Aluminiumlegierung besteht, und die Verwendung einer Aluminiumlegierung zur Herstellung eines solchen Motorbauteils.

### STAND DER TECHNIK

In den letzten Jahren wurden zunehmend Forderungen nach besonders ökonomischen und damit ökologischen Transportmitteln laut, die hohen Verbrauchs- und Emissionsanforderungen gerecht werden müssen. Zudem besteht jeher das Bedürfnis, Motoren möglichst leistungsfähig und verbrauchsarm zu gestalten. Ein entscheidender Faktor bei der Entwicklung von leistungsfähigen und emissionsarmen Verbrennungsmotoren sind Kolben, die bei immer höheren Verbrennungstemperaturen und Verbrennungsdrücken eingesetzt werden können, was im Wesentlichen durch immer leistungsfähigere Kolbenwerkstoffe ermöglicht wird.

Grundsätzlich muss ein Kolben für einen Verbrennungsmotor eine hohe Warmfestigkeit aufweisen und dabei gleichzeitig möglichst leicht und fest sein. Dabei ist es von besonderer Bedeutung, wie die mikrostrukturelle Verteilung, Morphologie, Zusammensetzung und thermische Stabilität höchstwarmfester Phasen ausgebildet sind. Eine diesbezügliche Optimierung berücksichtigt üblicherweise einen minimalen Gehalt an Poren und oxidischen Einschlüssen.

Der gesuchte Werkstoff muss sowohl hinsichtlich isothermer Schwingfestigkeit (HCF) als auch hinsichtlich thermomechanischer Ermüdungsfestigkeit (TMF) optimiert werden. Um die TMF möglichst gut auszugestalten ist stets eine möglichst feine Mikrostruktur des Werkstoffs anzustreben. Eine feine Mikrostruktur reduziert die Gefahr des Entstehens von Mikroplastizität bzw. von Mikrorissen an relativ großen primären Phasen (insbesondere an primären Siliziumausscheidungen) und damit auch die Gefahr von Rissinitiierung und -ausbreitung.

Grundsätzlich ist bekannt, dass sich beim Druckgussverfahren eine feinere Mikrostruktur durch eine höhere Erstarrungsgeschwindigkeit einstellen lässt. Eine hohe Erstarrungsgeschwindigkeit führt darüber hinaus dazu, dass festigkeitssteigernde Elemente mit einer höheren Konzentration eingebracht werden können. Dadurch ist es möglich, einen höheren Gehalt an hochwarmfesten, thermisch stabilen Phasen sowie einen größeren Anteil an gelösten Legierungselementen zum Aushärten im Aluminiummischkristall zu erreichen. Sowohl die feine Mikrostruktur als auch die hohe Konzentration an Festigkeit steigernden Elementen tragen dazu bei, dass die Hochtemperatureigenschaften HCF und TMF von Kolben für Verbrennungsmotoren verbessert werden.

Unter TMF-Beanspruchung treten an relativ großen primären Phasen, insbesondere an primären Siliziumausscheidungen, aufgrund unterschiedlicher Ausdehnungskoeffizienten der einzelnen Bestandteile der Legierung, nämlich der Matrix und der primären Phasen, Mikroplastizitäten bzw. Mikrorisse auf, die die Lebensdauer des Kolbenwerkstoffs erheblich senken können. Zur Erhöhung der Lebensdauer ist bekannt, die primären Phasen möglichst klein zu halten.

Beim Druckguss gibt es jedoch eine Konzentrationsobergrenze, bis zu der Legierungselemente eingebracht werden sollten und bei deren Überschreiten die Gießbarkeit der Legierung erschwert oder unmöglich gemacht wird und/oder wobei die Gussteile beim Entformen spröde brechen. Darüber hinaus kommt es bei zu hohen Konzentrationen von festigkeitssteigernden Elementen zur Bildung großer plattenförmiger intermetallischer Phasen, die die Ermüdungsfestigkeit drastisch absenken.

WO 00/71767 A1 und WO 00/71772 A1 offenbaren jeweils eine Legierung mit den folgenden Legierungsbestandteilen (in Gewichtsprozent): Si: 6,0-14,0; Ni: 0,05-1,2; Cu: 3,0-8,0; Mg: 0,5-1,5; Fe: 0,01-0,8; Mn: 0,01-1,0; Zr: 0,05-1,2; V: 0,05-1,2; Ti: 0,05-1,2; Sr: 0,001-0,10; Rest: Al.

Eine Aufgabe der vorliegenden Erfindung liegt darin, ein Verfahren zur Herstellung eines Motorbauteils, insbesondere eines Kolbens für einen Verbrennungsmotor bereitzustellen, bei dem eine Aluminiumlegierung im Druckgussverfahren abgegossen wird, so dass ein höchstwarmfestes Motorbauteil im Druckgussverfahren hergestellt werden kann.

Die Lösung dieser Aufgabe wird durch das Verfahren nach Anspruch 1 gegeben. Weitere bevorzugte Ausführungsformen der Erfindung ergeben sich aus den diesbezüglichen Unteransprüchen.

Eine weitere Aufgabe der Erfindung liegt darin, ein Motorbauteil, insbesondere einen Kolben für einen Verbrennungsmotor, bereitzustellen, das/der höchstwarmfest ist und dabei zumindest teilweise aus einer Aluminiumlegierung besteht.

Diese Aufgabe wird durch den Gegenstand des Anspruchs 3 gelöst und weitere bevorzugte Ausführungsformen ergeben sich aus den diesbezüglichen Unteransprüchen.

Bei einem erfindungsgemäßen Verfahren besteht die Aluminiumlegierung aus den folgenden Legierungselementen:
Silizium: 6 Gew.-% bis 10 Gew.-%,
Nickel: 1,2 Gew.-% bis 2 Gew.-%,
Kupfer: 8 Gew.-% bis 10 Gew.-%,
Magnesium: 0,5 Gew.-% bis 1,5 Gew.-%,
Eisen: 0,6 Gew.-% bis 1,5 Gew.-%,
Mangan: 0,2 Gew.-% bis 0,4 Gew.-%,
Zirkonium: 0,2 Gew.-% bis 0,5 Gew.-%,
Vanadium: 0,1 Gew.-% bis 0,3 Gew.-%,
Titan: 0,1 Gew.-% bis 0,5 Gew.-%
optional Phosphor: weniger als 30 ppm,
Rest: Aluminium und nicht zu vermeidende Verunreinigungen. Durch die gewählte Aluminiumlegierung ist es möglich, im Druckgussverfahren ein Motorbauteil herzustellen, das einen hohen Anteil fein verteilter, hochwarmfester, thermisch stabiler Phasen enthält. Somit kann ein höchstwarmfestes Motorbauteil im Druckgussverfahren hergestellt werden. Durch das Druckgussverfahren wird ermöglicht, dass besonders endformnahe Konturen gegossen werden können, so dass Bearbeitungsaufmaße stark reduziert werden können. Außerdem wird eine hohe Erstarrungsgeschwindigkeit des Motorbauteils erreicht, was zu einer besonders feinen Mikrostruktur führt, eine hohe Konzentration an Legierungselementen erlaubt und somit deren Nutzung ermöglicht. Die erfindungsgemäßen Anteile an Kupfer, Zirkonium, Vanadium und Titan führen zu festigkeitssteigernden Ausscheidungen, ohne jedoch große plattenförmige intermetallische Phasen zu bilden.

Mit Vorteil weist die Aluminiumlegierung 0,9 Gew.-% bis 1,1 Gew.-% Eisen und alternativ oder zusätzlich 8,5 Gew.-% bis 10 Gew.-% Silizium auf.

Dieser bevorzugte Eisengehalt wirkt sich besonders vorteilhaft auf die Gießbarkeit der Legierung im Druckgussverfahren aus. Der bevorzugte Siliziumgehalt vermeidet primäre Siliziumausscheidungen und führt insbesondere dazu, dass der besonders hoch belastete Muldenrand des Kolbens nahezu frei von primären Siliziumausscheidungen gehalten werden kann. Der bevorzugte Siliziumgehalt führt zu besonders guten TMF-Eigenschaften des Motorbauteils, insbesondere des Kolbens.

Mit Vorteil beträgt in der Aluminiumlegierung das Gewichtsverhältnis von Eisen zu Mangan höchstens 5:1 bevorzugt etwa 3:1. In dieser Ausführungsform enthält die Aluminiumlegierung also höchstens fünf Teile Eisen gegenüber einem Teil Mangan, bevorzugt etwa drei Teile Eisen gegenüber einem Teil Mangan. Durch dieses Verhältnis werden besonders vorteilhafte Festigkeitseigenschaften des Motorbauteils erzielt.

Bevorzugt weist die Aluminiumlegierung einen Phosphorgehalt von weniger als 30 ppm auf. Dies hilft dabei, primäre Siliziumausscheidungen zu vermeiden und dient, ebenso wie ein bevorzugter Siliziumgehalt der Legierung, dazu, insbesondere den Muldenrand des Kolbens nahezu frei von primären Siliziumausscheidungen zu halten. Der bevorzugte maximale Phosphorgehalt führt also ebenfalls zu besonders guten TMF-Eigenschaften des Motorbauteils.

Im Übrigen weist die Aluminiumlegierung Aluminium und nicht zu vermeidende Verunreinigungen auf.

Ein erfindungsgemäßes Motorbauteil besteht zumindest teilsweise aus einer der oben genannten Aluminiumlegierungen. Ein weiterer unabhängiger Aspekt der Erfindung liegt in der Verwendung der oben ausgeführten Aluminiumlegierung für die Herstellung eines Motorbauteils, insbesondere eines Kolbens eines Verbrennungsmotors. Insbesondere wird die aufgefundene Aluminiumlegierung dabei im Druckgussverfahren verarbeitet.

## Patentansprüche

1. Verfahren zur Herstellung eines Motorbauteils, insbesondere eines Kolbens für einen Verbrennungsmotor, bei dem eine Aluminiumlegierung im Druckgussverfahren abgegossen wird,
wobei die Aluminiumlegierung aus den folgenden Legierungselementen besteht:
Silizium: 6 Gew.-% bis 10 Gew.-%, optional 8,5 Gew.-% bis 10 Gew.-%,
Nickel: 1,2 Gew.-% bis 2 Gew.-%,
Kupfer: 8 Gew.-% bis 10 Gew.-%,
Magnesium: 0,5 Gew.-% bis 1,5 Gew.-%,
Eisen: 0,6 Gew.-% bis 1,5 Gew.-%, optional 0,9 Gew.-% bis 1,1 Gew.-%,
Mangan: 0,2 Gew.-% bis 0,4 Gew.-%,
Zirkonium: 0,2 Gew.-% bis 0,5 Gew.-%,
Vanadium: 0,1 Gew.-% bis 0,3 Gew.-%,
Titan: 0,1 Gew.-% bis 0,5 Gew.-%,
optional Phosphor: weniger als 30 ppm,
Rest: Aluminium und nicht zu vermeidende Verunreinigungen.

2. Verfahren nach Anspruch 1, wobei in der Aluminiumlegierung das Gewichtsverhältnis von Eisen zu Mangan höchstens 5:1, bevorzugt das Gewichtsverhältnis von Eisen zu Mangan etwa 3:1 beträgt.

3. Motorbauteil, insbesondere Kolben für einen Verbrennungsmotor, das zumindest teilweise aus einer Aluminiumlegierung besteht,
wobei die Aluminiumlegierung aus den folgenden Legierungselementen besteht:
Silizium: 6 Gew.-% bis 10 Gew.-%, optional 8,5 Gew.-% bis 10 Gew.-%,
Nickel: 1,2 Gew.-% bis 2 Gew.-%,
Kupfer: 8 Gew.-% bis 10 Gew.-%,
Magnesium: 0,5 Gew.-% bis 1,5 Gew.-%,
Eisen: 0,6 Gew.-% bis 1,5 Gew.-%, optional 0,9 Gew.-% bis 1,1 Gew.-%,
Mangan: 0,2 Gew.-% bis 0,4 Gew.-%,
Zirkonium: 0,2 Gew.-% bis 0,5 Gew.-%,
Vanadium: 0,1 Gew.-% bis 0,3 Gew.-%,
Titan: 0,1 Gew.-% bis 0,5 Gew.-%,
optional Phosphor: weniger als 30 ppm,
Rest: Aluminium und nicht zu vermeidende Verunreinigungen.

4. Motorbauteil nach Anspruch 3, wobei in der Aluminiumlegierung das Gewichtsverhälthis von Eisen zu Mangan höchstens 5:1, bevorzugt das Gewichtsverhältnis von Eisen zu Mangan etwa 3:1 beträgt.

5. Verwendung einer Aluminiumlegierung zur Herstellung eines Motorbauteils, insbesondere eines Kolbens eines Verbrennungsmotors,
wobei die Aluminiumlegierung aus den folgenden Legierungselementen besteht:
Silizium: 6 Gew.-% bis 10 Gew.-%, optional 8,5 Gew.-% bis 10 Gew.-%,
Nickel: 1,2 Gew.-% bis 2 Gew.-%,
Kupfer: 8 Gew.-% bis 10 Gew.-%,
Magnesium: 0,5 Gew.-% bis 1,5 Gew.-%,
Eisen: 0,6 Gew.-% bis 1,5 Gew.-%, optional 0,9 Gew.-% bis 1,1 Gew.-%,
Mangan: 0,2 Gew.-% bis 0,4 Gew.-%,
Zirkonium: 0,2 Gew.-% bis 0,5 Gew.-%,
Vanadium: 0,1 Gew.-% bis 0,3 Gew.-%,
Titan: 0,1 Gew.-% bis 0,5 Gew.-%,
optional Phosphor: weniger als 30 ppm,
Rest: Aluminium und nicht zu vermeidende Verunreinigungen.

## Claims

1. Method for the manufacture of an engine component, in particular a piston for an internal combustion engine, in which an aluminium alloy is cast by die-casting, wherein the aluminium alloy consists of the following alloying elements:
silicon: 6 wt. % to 10 wt. %, optionally
8.5 wt. % to 10 wt. %
nickel: 1.2 wt. % to 2 wt. %,
copper: 8 wt. % to 10 wt. %,
magnesium: 0.5 wt. % to 1.5 wt. %,
iron: 0.6 wt. % to 1.5 wt. %, optionally
0.9 wt. % to 1.1 wt. %
manganese: 0.2 wt. % to 0.4 wt. %,
zirconium: 0.2 wt. % to 0.5 wt. %,
vanadium: 0.1 wt. % to 0.3 wt. %,
titanium: 0.1 wt. % to 0.5 wt. %,
optionally phosphorus: less than 30 ppm,
remainder: aluminium and unavoidable impurities.

2. Method according to claim 1, wherein in the aluminium alloy the weight ratio of iron to manganese is not more than 5:1, and preferably the weight ratio of iron to manganese is approximately 3:1.

3. Engine component, in particular piston for an internal combustion engine, which at least partially is made of an aluminium alloy,
wherein the aluminium alloy consists of the following alloying elements:
silicon: 6 wt. % to 10 wt. %, optionally
8.5 wt. % to 10 wt. %
nickel: 1.2 wt. % to 2 wt. %,
copper: 8 wt. % to 10 wt. %,
magnesium: 0.5 wt. % to 1.5 wt. %,
iron: 0.6 wt. % to 1.5 wt. %, optionally
0.9 wt. % to 1.1 wt. %
manganese: 0.2 wt. % to 0.4 wt. %,
zirconium: 0.2 wt. % to 0.5 wt. %,
vanadium: 0.1 wt. % to 0.3 wt. %,
titanium: 0.1 wt. % to 0.5 wt. %,
optionally phosphorus: less than 30 ppm,
remainder: aluminium and unavoidable impurities.

4. Engine component according to claim 3, wherein in the aluminium alloy the weight ratio of iron to manganese is not more than 5:1, and preferably the weight ratio of iron to manganese is approximately 3:1.

5. Use of an aluminium alloy for the manufacture of an engine component, in particular a piston of an internal combustion engine,
wherein the aluminium alloy consists of the following alloying elements:
silicon: 6 wt. % to 10 wt. %, optionally
8.5 wt. % to 10 wt. %
nickel: 1.2 wt. % to 2 wt. %,
copper: 8 wt. % to 10 wt. %,
magnesium: 0.5 wt. % to 1.5 wt. %,
iron: 0.6 wt. % to 1.5 wt. %, optionally
0.9 wt. % to 1.1 wt. %
manganese: 0.2 wt. % to 0.4 wt. %,
zirconium: 0.2 wt. % to 0.5 wt. %,
vanadium: 0.1 wt. % to 0.3 wt. %,
titanium: 0.1 wt. % to 0.5 wt. %,
optionally phosphorus: less than 30 ppm,
remainder: aluminium and unavoidable impurities.

## Revendications

1. Procédé de fabrication d'un composant de moteur, en particulier d'un piston pour un moteur à combustion interne, dans lequel un alliage d'aluminium est coulé dans un procédé de moulage sous pression,
dans lequel l'alliage en aluminium se compose des éléments d'alliage suivants :
silicium : 6 % en poids à 10 % en poids, facultativement 8,5 % en poids à 10 % en poids,
nickel : 1,2 % en poids à 2 % en poids,
cuivre : 8 % en poids à 10 % en poids,
magnésium : 0,5 % en poids à 1,5 % en poids,
fer : 0,6 % en poids à 1,5 % en poids, facultativement 0,9 % en poids à 1,1 % en poids,
manganèse : 0,2 % en poids à 0,4 % en poids,
zirconium : 0,2 % en poids à 0,5 % en poids,
vanadium : 0,1 % en poids à 0,3 % en poids,
titane : 0,1 % en poids à 0,5 % en poids,
facultativement phosphore : moins de 30 ppm,
reste : aluminium et impuretés inévitables.

2. Procédé selon la revendication 1, dans lequel le rapport en poids du fer sur le manganèse dans l'alliage en aluminium est au maximum de 5/1, de préférence, le rapport en poids du fer sur le manganèse est d'environ 3/1.

3. Composant de moteur, en particulier piston pour un moteur à combustion interne, qui se compose au moins partiellement d'un alliage en aluminium et a été au moins partiellement coulé dans un procédé de moulage sous pression,
dans lequel l'alliage en aluminium se compose des éléments d'alliage suivants :
silicium : 6 % en poids à 10 % en poids, facultativement 8,5 % en poids à 10 % en poids,
nickel : 1,2 % en poids à 2 % en poids,
cuivre : 8 % en poids à 10 % en poids,
magnésium : 0,5 % en poids à 1,5 % en poids,
fer : 0,6 % en poids à 1,5 % en poids, facultativement 0,9 % en poids à 1,1 % en poids,
manganèse : 0,2 % en poids à 0,4 % en poids,
zirconium : 0,2 % en poids à 0,5 % en poids,
vanadium : 0,1 % en poids à 0,3 % en poids,
titane : 0,1 % en poids à 0,5 % en poids,
facultativement phosphore : moins de 30 ppm,
reste : aluminium et impuretés inévitables.

4. Composant de moteur selon la revendication 3, dans lequel le rapport en poids du fer sur le manganèse dans l'alliage en aluminium est au maximum de 5/1, de préférence, le rapport en poids du fer sur le manganèse est d'environ 3/1.

5. Utilisation d'un alliage en aluminium pour la fabrication d'un composant de moteur, en particulier d'un piston pour un moteur à combustion interne,
dans lequel l'alliage en aluminium se compose des éléments d'alliage suivants :
silicium : 6 % en poids à 10 % en poids, facultativement 8,5 % en poids à 10 % en poids,
nickel : 1,2 % en poids à 2 % en poids,
cuivre : 8 % en poids à 10 % en poids,
magnésium : 0,5 % en poids à 1,5 % en poids,
fer : 0,6 % en poids à 1,5 % en poids, facultativement 0,9 % en poids à 1,1 % en poids,
manganèse : 0,2 % en poids à 0,4 % en poids,
zirconium : 0,2 % en poids à 0,5 % en poids,
vanadium : 0,1 % en poids à 0,3 % en poids,
titane : 0,1 % en poids à 0,5 % en poids,
facultativement phosphore : moins de 30 ppm,
reste : aluminium et impuretés inévitables.
